Europäisches Patentamt

European Patent Office

Office européen des brevets

(19)

(11) **EP 1 272 813 B1**

(12) **FASCICULE DE BREVET EUROPEEN**

(45) Date de publication et mention
de la délivrance du brevet:
**25.08.2004 Bulletin 2004/35**

(21) Numéro de dépôt: **01923779.1**

(22) Date de dépôt: **10.04.2001**

(51) Int Cl.⁷: $G01C\ 9/12$, G01B 11/16

(86) Numéro de dépôt international:
**PCT/FR2001/001091**

(87) Numéro de publication internationale:
**WO 2001/077618 (18.10.2001 Gazette 2001/42)**

(54) **INCLINOMETRE A RESEAU DE BRAGG**

BRAGG-GITTER-INKLINOMETER

INCLINOMETER WITH BRAGG GRATING

(84) Etats contractants désignés:
**DE GB IT**

(30) Priorité: **11.04.2000 FR 0004618**

(43) Date de publication de la demande:
**08.01.2003 Bulletin 2003/02**

(73) Titulaire: **COMMISSARIAT A L'ENERGIE
ATOMIQUE
75752 Paris Cédex 15 (FR)**

(72) Inventeurs:
• **FERDINAND, Pierre**
**F-78800 Houilles (FR)**
• **ROUGEAULT, Stéphane**
**F-92330 Sceaux (FR)**

(74) Mandataire: **Ilgart, Jean-Christophe et al
c/o Société Brevatome,
3, rue du Docteur Lanceraux
75008 Paris (FR)**

(56) Documents cités:
WO-A-97/15805          WO-A-99/39214
FR-A- 2 665 529

• XU M G ET AL: "THERMALLY-COMPENSATED
BENDING GAUGE USING SURFACE-MOUNTED
FIBRE GRATINGS" INTERNATIONAL JOURNAL
OF OPTOELECTRONICS (INCL.OPTICAL
COMPUTING & PROCESSING),GB,TAYLOR &
FRANCIS, LONDON, vol. 9, no. 3, 1 mai 1994
(1994-05-01), pages 281-283, XP000483065 ISSN:
0952-5432
• PATENT ABSTRACTS OF JAPAN vol. 2000, no.
03, 30 mars 2000 (2000-03-30) -& JP 11 344358 A
(FURUKAWA ELECTRIC CO
LTD:THE;TOKYOTO GESUIDO SERVICE KK;
FUJI ELECTRIC), 14 décembre 1999 (1999-12-14)

## Description

## DOMAINE TECHNIQUE

La présente invention concerne un inclinomètre c'est-à-dire un dispositif destiné à mesurer des variations d'inclinaison.

L'invention est notamment utilisable dans les mines, les forages, dans le domaine du génie civil, pour la surveillance d'ouvrages d'art (par exemple les ponts et les tunnels) et de bâtiments (en particulier les monuments historiques), et partout où un contrôle précis de la stabilité d'une structure est requis, particulièrement sur le long terme.

## ETAT DE LA TECHNIQUE ANTERIEURE

Diverses méthodes d'auscultation sont classiquement utilisées pour surveiller l'amplitude et la cadence de déformations, tant horizontales que verticales, de structures, de la surface du sol et de parties accessibles en sous-sol dans diverses catégories de constructions.

Classiquement, dans le génie civil, des instruments appelés «extensomètres » sont employés pour surveiller des déformations. Divers extensomètres sont commercialement disponibles.

En ce qui concerne les mesures de rotation, on connaît déjà des inclinomètres électriques, également appelés «tiltmètres», qui sont employés pour surveiller le changement de l'inclinaison de points situés sur le sol ou dans ce dernier ou disposés sur une structure. Ces inclinomètres se composent d'un capteur qui est sensible à la gravité (pendule) et disposé dans un logement approprié. Plusieurs types d'inclinomètres sont connus.

On connaît par exemple un inclinomètre mécanique qui se compose d'une poutre et d'un niveau à bulle, avec un réglage de mise à niveau à l'une de ses extrémités. Cette poutre est fixée sur deux sphères de référence ancrées sur le système a mesurer. Le réglage de mise à niveau se fait en ajustant le niveau à bulle et un cadran compte-tours est utilisé pour faire la mesure. La plage de mesure est typiquement de quelques degrés. La précision vaut approximativement $\pm$ 0,013 millimètre pour une poutre de 200 millimètres de long (soit environ 60 µrad) et se réduit à $\pm$ 0,13 millimètre pour une poutre de 900 millimètres de long (soit environ 150 µrad).

On connaît aussi un inclinomètre comportant un capteur accélérométrique. La mesure est faite en plaçant l'inclinomètre dans une position reproductible sur une pièce plate de référence. On effectue une première lecture puis on tourne le capteur de 180 degrés et l'on fait une seconde lecture. La pièce plate de référence est métallique ou en céramique et doit être solidement fixée sur une surface que l'on souhaite contrôler. La gamme de mesure va de -30° à +30° et la précision est typiquement de $\pm$ 250 µrad.

On connaît en outre un inclinomètre comportant un pendule fixé à la partie supérieure de cet inclinomètre. L'inclinaison du corps de ce dernier induit des efforts de flexion sur une pièce. Ces efforts de flexion sont surveillés par deux capteurs à cordes vibrantes fixés de chaque côté de la pièce. Dans une autre configuration, les deux capteurs à cordes vibrantes sont fixés entre le pendule et le capot de l'inclinomètre. Cette configuration permet, grâce à un montage différentiel, de s'affranchir des effets de la température.

La gamme de mesure va typiquement de -0,11° à +0,11° avec une précision d'environ 0,5 % de la pleine échelle (environ $\pm$ 10 µrad à $\pm$ 100 µrad).

On connaît de plus un inclinomètre comportant un capteur de niveau électrolytique. Dans un premier mode de réalisation, une cellule de mesure en verre contenant un liquide électriquement conducteur (du mercure par exemple) est scellée en ses deux extrémités. La précision de mesure de ce type de capteur est moyenne. De plus, sa sensibilité thermique est élevée. De ce fait, il ne convient pas très bien aux applications géotechniques ou de génie civil.

Dans un deuxième mode de réalisation, le vide est fait dans la cellule de mesure. Les performances sont meilleures. Néanmoins, un étalonnage spécifique est nécessaire pour chaque cellule et des recalibrages sont nécessaires. De tels inclinomètres sont onéreux surtout lorsqu'ils sont utilisés en réseau (« network »).

Considérons à présent des capteurs à fibres optiques et notamment les avantages de tels capteurs, tels que l'insensibilité aux perturbations électromagnétiques.

Faisons d'abord quelques rappels sur les réseaux de Bragg photoinscrits (« photo-induced fiber Bragg gratings »).

Un réseau de Bragg photo-inscrit dans une fibre optique consiste en une structure périodique formée par une modulation de l'indice de réfraction du coeur de la fibre optique. Une telle structure se comporte quasiment comme un miroir pour une bande spectrale très fine autour d'une longueur d'onde caractéristique $\lambda_B$ (longueur d'onde pour laquelle il y a accord de phase entre les multiples réflexions au sein du réseau) et reste transparente pour toutes les autres longueurs d'onde. En effet, les multiples ondes réfléchies à ces autres longueurs d'onde ne sont pas en phase, interfèrent destructivement en réflexion et sont donc transmises.

La longueur d'onde caractéristique, appelée « longueur d'onde de Bragg », est définie par la relation de Bragg :

$$\lambda_B = 2.n_{eff}.\Lambda$$

$\Lambda$ étant le pas (« pitch ») du réseau d'indice effectif $n_{eff}$.

Les caractéristiques finales d'un réseau de Bragg photo-inscrit dépendent des paramètres d'inscription tels que le type de laser (longueur d'onde, régime de fonctionnement) et la puissance lumineuse utilisée, la longueur d'onde $\lambda$ à laquelle ce réseau est inscrit, l'indice effectif $n_{eff}$ de la fibre optique dans laquelle il est inscrit, l'amplitude de la modulation ou variation d'indice $\Delta n$ et la période $\Lambda$ de cette variation d'indice.

Ces paramètres fixent les grandeurs caractéristiques du réseau de Bragg, à savoir : la longueur d'onde de Bragg $\lambda_B$, la réflectivité $R_{max}$ à $\lambda_B$, et la largeur à mi-hauteur du pic de réflectivité, ainsi que la propension du réseau à supporter de grandes variation de température ou de forts allongements, ce qui est un aspect important pour l'utilisation de ce réseau de Bragg en tant que transducteur.

Considérons maintenant un tel transducteur à réseau de Bragg. Compte tenu de la relation de Bragg caractérisant ce réseau, la longueur d'onde caractéristique $\lambda_B$ dépend de la température et des contraintes ($\sigma x$, $\sigma y$, $\sigma z$) appliquées à la fibre dans laquelle est formé le réseau.

Il est d'usage de séparer les trois contributions que sont les variations de température $\Delta T$, les allongements $\varepsilon = \Delta L/L$ suivant l'axe du coeur de la fibre et les variations de pression hydrostatique $\Delta P$, selon la relation :

$$\Delta\lambda_B/\lambda_B = a'.\Delta T + b'.\varepsilon + c'.\Delta P$$

où a', b' et c' sont des coefficients dépendant des caractéristiques de la fibre et, dans une moindre mesure, de sa température. En pratique ils peuvent être assimilés à des constantes, indépendantes de la température, sur une large gamme d'utilisation.

Ainsi, une mesure précise de $\Delta\lambda_B$ (variation de $\lambda_B$ par rapport à une référence initiale) permet de déterminer l'amplitude de la variation du phénomène qui a induit cette variation de $\lambda_B$.

Au-delà de son simple rôle de filtre spectral, le réseau de Bragg constitue donc bien un « transducteur » puisqu'il transforme les évolutions d'une grandeur d'influence en un décalage spectral proportionnel à ces évolutions.

Considérons à présent la réponse du réseau de Bragg à une variation de température. Lorsque le réseau est soumis à une telle variation, il se dilate ou se contracte, ce qui modifie son pas. De plus, puisque l'indice de réfraction d'un matériau dépend également de la température, ces deux phénomènes entraînent une variation $\Delta\lambda_B$ de la longueur d'onde caractéristique telle que :

$$\frac{\Delta\lambda_B}{\lambda_B} = \frac{\Delta(n\Lambda)}{n\Lambda} = \left[\frac{1}{\Lambda}\frac{d\Lambda}{dT} + \frac{1}{n}\frac{dn}{dT}\right]\Delta T = a'.\Delta T$$

Dans le cas de la silice, le coefficient a' vaut sensiblement $7{,}8\ 10^{-6}/°C$.

En posant $a = a'.\lambda_B$ cn peut alors écrire :

$$\Delta\lambda_B = a.\Delta T$$

Considérons maintenant la réponse du réseau de Bragg à des déformations. Comme on l'a vu, des contraintes sont aussi susceptibles de modifier la longueur d'onde caractéristiQue du réseau.

Nous pouvons définir la variation de la longueur d'onde de Bragg en fonction d'un allongement comme suit :

$$\frac{\Delta\lambda_B}{\lambda_B} = \left(1 - \frac{n_e^2}{2}(p_{11} - \nu(p_{11} + p_{12}))\right)\varepsilon_z = (1 - p_e)\varepsilon_z = b'.\varepsilon_z$$

où $n_e$, $\varepsilon_z$, E, $\nu$ et $p_e$ représentent respectivement l'indice optique du coeur de la fibre, la variation relative de longueur de la fibre (déformation suivant l'axe z de la fibre), le module d'Young, le coefficient de Poisson et la constante photo-élastique du matériau constituant la fibre ; $p_{11}$ et $p_{12}$ sont des coefficients élasto-optiques. En prenant l'exemple de la silice, le coefficient b' vaut environ $0{,}78 \times 10^{-6}/(\mu m/m)$.

En posant $b = b'.\lambda_B$ on peut alors écrire :

EP 1 272 813 B1

$$\Delta\lambda_B = b.\varepsilon_Z$$

Considérons ensuite la réponse du réseau de Bragg à une variation $\Delta P$ de pression. La réponse spectrale de la raie de Bragg à cette variation peut s'écrire : $\Delta\lambda_B/\lambda_B = c' .\Delta P$.

Pour la silice, le coefficient c' vaut environ $-2.7\times10^{-6}$ /MPa.

Les valeurs des sensibilités des réseaux de Bragg photo-inscrits dans des fibres optiques en silice sont regroupées dans le tableau I, pour les paramètres les plus importants (température, déformations et pression), et ce pour les trois principales longueurs d'onde utilisées.

TABLEAU I

| Sensibilité | $\lambda=0{,}83\,\mu m$ | $\lambda=1{,}3\,\mu m$ | $\lambda=1{,}55\,\mu m$ |
|---|---|---|---|
| Sensibilité thermique (pm/$^\circ$C) | 6 , 5 | 10,1 | 12,1 |
| Sensibilité aux déformations (pm/$\mu\varepsilon$) | 0,65 | 1,01 | 1,21 |
| Sensibilité à la pression hydrostatique (pm/MPa) | -2,4 | -3,7 | -4,5 |

Une fibre optique contenant de tels réseaux de Bragg peut donc servir de capteur de déformations. Le système de mesure de ces déformations peut alors comprendre une source optique à spectre large et un système d'analyse spectrale (par exemple spectrophotomètre ou cavité interférométrique de type Fabry-Perot) ou une source étroite à balayage (de type laser accordable). L'adjonction de réseaux de Bragg de référence permet une localisation spectrale absolue des pics de longueur d'onde qui sont réfléchis par des réseaux de Bragg de mesure.

## EXPOSÉ DE L'INVENTION

La présente invention a pour objet un inclinomètre qui est insensible aux perturbations électromagnétiques et qui, pour ce faire, utilise une ou une pluralité de fibres optiques ainsi qu'au moins un réseau de Bragg en tant que transducteur.

De plus, dans l'invention, des mesures de type spectral permettent de s'affranchir des fluctuations d'intensité lumineuse.

De façon précise, la présente invention a pour objet un inclinomètre destiné à mesurer une variation d'inclinaison d'une structure, cet inclinomètre étant caractérisé en ce qu'il comprend :

- une partie supérieure destinée à être rendue rigidement solidaire de la structure afin que l'inclinaison de cette partie supérieure varie comme celle de la structure,
- une partie inférieure destinée à se trouver au-dessous de la partie supérieure,
- une articulation des parties inférieure et supérieure, la partie inférieure formant un pendule librement suspendu à la partie supérieure par cette articulation,
- au moins deux portions de fibre optique placées de part et d'autre de l'articulation, chaque portion de fibre optique ayant des première et deuxième extrémités qui sont respectivement fixées aux parties inférieure et supérieure et étant préalablement mise en tension entre ces parties inférieure et supérieure, et
- au moins un réseau de Bragg (« Bragg grating »), ce réseau de Bragg étant formé dans l'une des deux portions de fibre optique,

toute variation d'inclinaison de la structure provoquant une rotation de la partie supérieure par rapport à la partie inférieure et induisant de ce fait une contrainte sur le réseau de Bragg, ce réseau de Bragg étant alors apte à modifier une lumière se propageant dans la portion de fibre optique où se trouve ce réseau de Bragg, la variation d'inclinaison de la structure étant déterminée à partir de la lumière ainsi modifiée.

Selon un mode de réalisation préféré, l'inclinomètre objet de l'invention comprend au moins deux réseaux de Bragg, ces deux réseaux de Bragg étant respectivement formés dans les deux portions de fibre optique et subissant ainsi respectivement une contrainte de traction et une contrainte de compression lors de la variation d'inclinaison de la structure, ces réseaux de Bragg permettant une mesure différentielle de longueur d'onde, l'inclinomètre étant alors insensible aux variations de température et de pression ambiantes.

L'articulation des parties inférieure et supérieure de l'inclinomètre objet de l'invention peut comprendre un axe de rotation destiné à être disposé horizontalement lors de la mesure de variation d'inclinaison.

Selon un mode de réalisation particulier de l'inclinomètre objet de l'invention, l'articulation des parties inférieure et supérieure a au moins deux degrés de liberté de rotation, cet inclinomètre comprenant au moins trois portions

**4**

de fibre optique mises en tension et placées autour de cette articulation et au moins deux réseaux de Bragg, ces deux réseaux de Bragg étant respectivement formés dans deux des trois portions de fibre optique, l'inclinomètre étant alors prévu pour mesurer une variation d'inclinaison définissable par deux angles de rotation. Il est plus avantageux de former un troisième réseau de Bragg dans la troisième portion de fibre optique, afin d'obtenir une troisième mesure, utilisée pour compenser l'effet de la température.

Dans le cas de ce mode de réalisation particulier, les trois portions de fibre optique peuvent par exemple être disposées avantageusement à 120°C les unes des autres autour de l'articulation.

Dans ce même cas, l'inclinomètre peut comprendre quatre portions de fibre optique mises en tension et disposées à 90° les unes des autres autour de l'articulation, et en outre au moins deux réseaux de Bragg, ces deux réseaux de Bragg étant respectivement formés dans deux des quatre portions de fibre optique et permettant de mesurer respectivement les deux anales.

Dans ce dernier cas, l'inclinomètre peut comprendre quatre réseaux de Bragg qui sont respectivement formés dans les quatre portions de fibre optique, chaque réseau de Bragg étant associé au réseau de Bragg qui lui est opposé par rapport à l'articulation, ces réseaux de Bragg associés permettant une mesure différentielle de longueur d'onde, l'inclinomètre étant alors insensible aux variations de température et de pression ambiantes.

L'articulation ayant au moins deux degrés de liberté de rotation peut comprendre une rotule ou une suspension de type Cardan, voire une pointe appuyée sur une surface dure.

L'inclinomètre objet de l'invention peut comprendre une seule fibre optique à laquelle appartient chaque portion de fibre optique.

Dans ce cas, on peut utiliser une pluralité d'inclinomètres conformes à l'invention, ces inclinomètres étant montés en série par l'intermédiaire de la fibre optique.

L'inclinomètre objet de l'invention peut, dans un mode de réalisation particulier, être interrogé en réflexion, par l'une au moins des extrémités de la fibre dans laquelle est ou sont formés le ou les réseaux de Bragg.

## BRÈVE DESCRIPTION DES DESSINS

La présente invention sera mieux comprise à la lecture de la description d'exemples de réalisation donnés ci-après, à titre purement indicatif et nullement limitatif, en faisant référence aux dessins annexés sur lesquels :

- la figure 1 illustre schématiquement le principe d'un mode de réalisation particulier de l'inclinomètre objet de l'invention,
- la figure 2 illustre schématiquement la partie centrale de l'inclinomètre de la figure 1,
- la figure 3 est une vue en coupe longitudinale schématique d'un mode de réalisation particulier de l'inclinomètre objet de l'invention,
- les figures 4, 5 et 6 sont des graphiques qui illustrent respectivement l'effet d'une simple rotation, l'effet d'une simple variation de température et l'effet combiné d'une rotation et d'une variation de température dans un exemple de l'inclinomètre objet de l'invention,
- la figure 7 est un graphique qui illustre schématiquement la compensation d'une variation de température dans un exemple de l'inclinomètre objet de l'invention,
- la figure 8 est une vue schématique d'un système comportant six réseaux de Bragg transducteurs et deux réseaux de Bragg de référence,
- les figures 9, 10 et 11 illustrent schématiquement des systèmes de mesure de variations d'inclinaison utilisant des inclinomètres conformes à l'invention,
- la figure 12 est une vue schématique d'un système de mesure de variations d'inclinaison dans plusieurs zones utilisant plusieurs inclinomètres conformes à l'invention montés en série,
- la figure 13 illustre très schématiquement un inclinomètre conforme à l'invention, n'utilisant qu'un seul réseau de Bragg, et
- les figures 14 et 15 illustrent très schématiquement des inclinomètres conformes à l'invention, permettant de mesurer des inclinaisons définissables par deux angles de rotation .

## EXPOSÉ DÉTAILLÉ DE MODES DE RÉALISATION PARTICULIERS

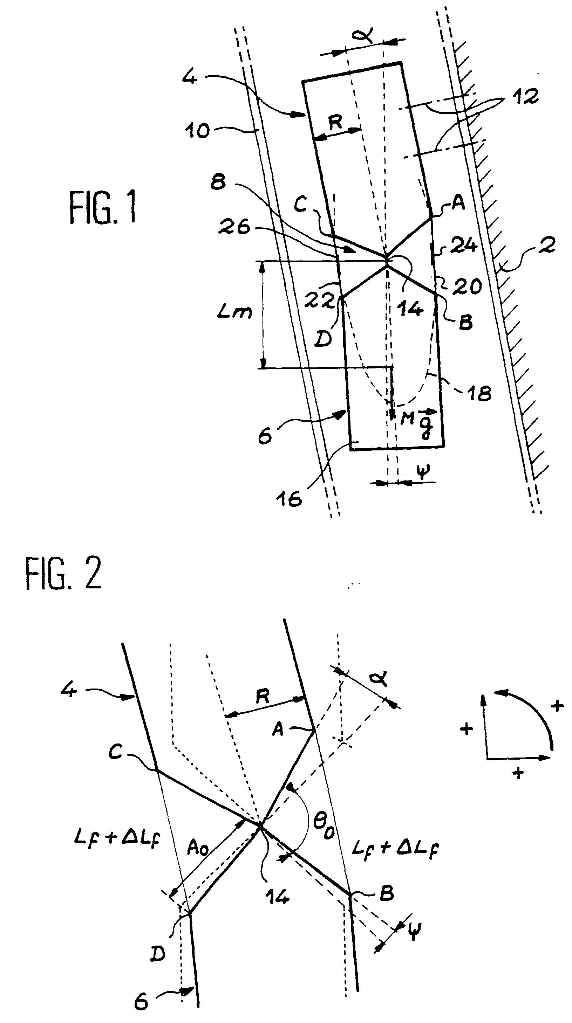

Un inclinomètre conforme à l'invention est schématiquement représenté sur la figure 1.

Cet inclinomètre est destiné à mesurer une variation d'inclinaison d'une structure. Dans l'exemple représenté, cette structure est une paroi 2 d'un bâtiment. On suppose que la paroi était initialement verticale (inclinaison d'un angle nul) et qu'elle s'est inclinée d'un angle $\alpha$ (vers la gauche de la figure 1).

L'inclinomètre comprend une partie supérieure 4 et une partie inférieure 6 ainsi qu'une articulation 8 de ces parties 4 et 6. L'inclinomètre comprend aussi un corps creux 10 dans lequel se trouvent les parties 4 et 6 et l'articulation 8.

Le corps 10 est pourvu de moyens 12 de fixation à la paroi 2. La partie supérieure 4 est fixée au corps 10 et se déplace donc avec l'environnement de l'inclinomètre (la paroi 2 dans l'exemple considéré).

L'articulation 8 comprend un axe de rotation 14 et la partie inférieure 6 (placée au-dessous de la partie supérieure 4) comporte une masse 16 de valeur M. Elle est ainsi sensible à la pesanteur caractérisée par un vecteur $\bar{g}$ et tend à rester orientée verticalement. Grâce à la masse 16, la partie inférieure forme un pendule librement suspendu à la partie supérieure par l'intermédiaire de l'axe de rotation 14.

L'inclinomètre comprend aussi une fibre optique 18. Deux portions 20 et 22 de cette fibre sont placées de part et d'autre de l'axe de rotation 14. De plus, les extrémités A et B de la portion de fibre 20 sont fixées respectivement aux parties supérieure et inférieure de l'inclinomètre. De même, les extrémités C et D de la portion de fibre 22 sont respectivement fixées à ces parties supérieure et inférieure.

Un réseau de Bragg 24 est photo-inscrit dans le coeur de la portion de fibre 20 et un réseau de Bragg 26, identique au réseau 24, est photo-inscrit dans le coeur de la portion de fibre 22. On dispose ainsi de deux réseaux de Bragg montés en opposition.

Ce montage en opposition permet une mesure différentielle de longueur d'onde.

Au préalable (c'est-à-dire avant de fixer le corps 10 de l'inclinomètre à la paroi 2), on a mis en tension les portions de fibre 20 et 22 tout en les fixant aux parties inférieure et supérieure, ces deux dernières étant maintenues orientées verticalement pendant ces mises en tension et ces fixations. On évite ainsi toute courbure de la fibre entre les parties inférieure et supérieure.

Le principe de l'inclinomètre de la figure 1 est de transformer la rotation d'angle $\alpha$ qu'il subit en un niveau de contraintes qui est proportionnel à l'angle $\alpha$ et appliqué aux réseaux de Bragg.

Il convient de noter que, dans l'exemple de la figure 1, une contrainte de traction est appliquée au réseau de Bragg 20 et une contrainte de compression est appliquée au réseau de Bragg 22.

Évaluons maintenant la réponse de l'inclinomètre de la figure 1 en fonction de ses paramètres mécaniques.

On note $\varepsilon_0$ la contrainte induite dans les portions de fibre 20 et 22 par la pré-tension de ces dernières, $\varepsilon_1$ la contrainte induite par la rotation d'angle $\alpha$ sur le réseau de Bragg 20 et $\varepsilon_2$ la contrainte induite par cette rotation sur le réseau de Bragg 22.

On suppose que la température ambiante varie de $T_0$ à $T_0+\Delta T$ pendant la mesure.

Par l'intermédiaire de la fibre optique 18, on mesure $\Delta\lambda_1-\Delta\lambda_2$ où $\Delta\lambda_1$ (respectivement $\Delta\lambda_2$) est la différence entre la longueur d'onde de Bragg du réseau 20 (respectivement du réseau 22) lorsque la température vaut $T_0+\Delta T$ et la contrainte appliquée vaut $\varepsilon_0+\varepsilon_1$ (respectivement $\varepsilon_0+\varepsilon_2$) et la longueur d'onde de Bragg de ce même réseau 20 (respectivement de ce même réseau 22) lorsque la température vaut $T_0$ et la contrainte appliquée vaut $\varepsilon_0$.

Grâce aux relations vues plus haut, on peut écrire :

$$\Delta\lambda_1-\Delta\lambda_2=[\lambda_1(\varepsilon_0+\varepsilon_1,\ T_0+\Delta T)-\lambda_1(\varepsilon_0,\ T_0)]-[\lambda_2(\varepsilon_0+\varepsilon_2,\ T_0+\Delta T)-\lambda_2(\varepsilon_0,\ T_0)]$$

$$= b.\varepsilon_1+a.\Delta T-(b.\varepsilon_2+a.\Delta T) = b.\ (\varepsilon_1-\varepsilon_2)$$

Comme l'inclinomètre de la figure 1 est symétrique, $\varepsilon_1$ et $\varepsilon_2$ ont la même valeur absolue que l'on note $\varepsilon$, mais sont de signes opposés, et le résultat de la mesure vaut $2.b.\varepsilon$.

Cet inclinomètre est donc intrinsèquement insensible aux variations de température ambiante.

On montrerait de la même façon qu'il est intrinsèquement insensible aux variations de pression ambiante.

Considérons le comportement des portions 20 et 22 de la fibre optique 18 sous contrainte.

Cette fibre optique 18 est utilisée dans sa zone élastique conformément à la loi de Hooke :

$$\frac{\Delta L_f}{L_f} = \varepsilon = \frac{F}{S_f.E_f}$$

avec :

$L_f$ : Longueur de chacune des portions de la fibre 20 et 22 avant la rotation d'angle $\alpha$

$\Delta L_f$ : Allongement de la portion de fibre 20, induit par la rotation d'angle $\alpha$ (la portion de fibre 22 subissant alors une contraction $\Delta L_f$)

$E_f$ : Module d'Young de la fibre 18

$S_f$ : Section de la fibre 18

F : Force appliquée à chaque portion de fibre.

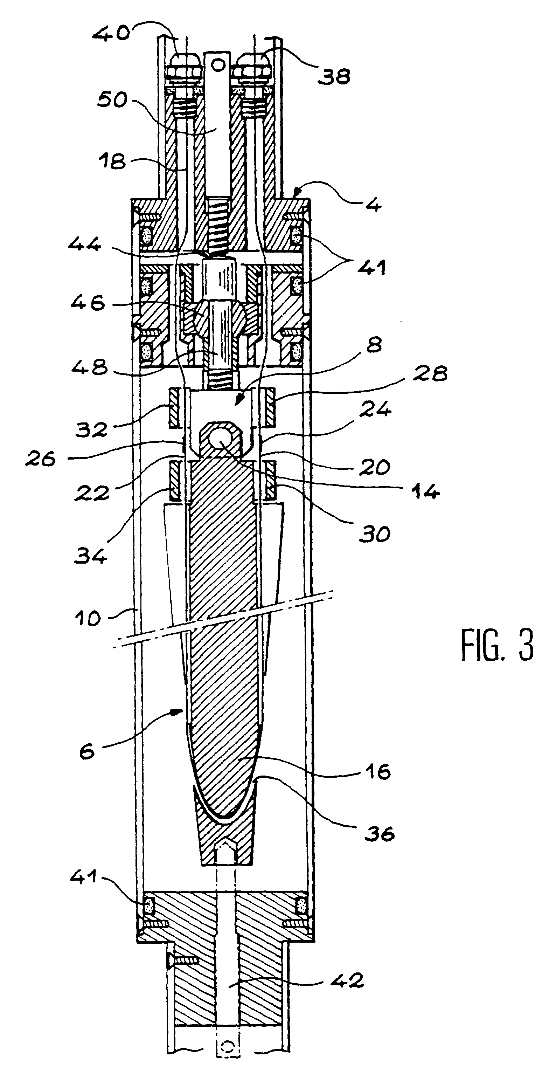

Nous pouvons calculer $L_f$ et $\Delta L_f$ géométriquement. Considérons la partie centrale de l'inclinomètre de la figure 1 (voir la figure 2). Au repos (c'est-à-dire avant la rotation d'angle $\alpha$) l'angle entre la partie tendue de la fibre et l'axe de rotation a une valeur $\theta_0$. Après rotation de la partie supérieure 4, la valeur de cet angle devient $\theta_0 + \alpha - \Psi$.

Nous pouvons exprimer $L_f$ en fonction de $A_0$ qui représente la distance entre l'axe de rotation et le point de fixation inférieur B (respectivement D) de la fibre 20 (respectivement 22) sur la figure 1, et de $\theta_0$ :

$$L_f = 2 \cdot A_0 \cdot \sin\left(\frac{\theta_0}{2}\right) \qquad (1)$$

Sous contrainte, $L_f$ devient (pour la portion de fibre 20) :

$$L_f + \Delta L_f = 2 \cdot A_0 \cdot \sin\left(\frac{\theta_0 + \alpha - \Psi}{2}\right) \quad \text{ou} \quad L_f + \Delta L_f = 2 \cdot A_0 \cdot \sin\left(\frac{\theta_0 + \Delta\theta}{2}\right)$$

La dérivation de l'équation (1) donne:

$$\Delta L_f = 2 \cdot A_0 \cdot \left(\frac{\Delta\theta_0}{2}\right) \cdot \cos\left(\frac{\theta_0}{2}\right) \quad \text{ou} \quad \Delta L_f = 2 \cdot A_0 \cdot \left(\frac{\alpha - \Psi}{2}\right) \cdot \cos\left(\frac{\theta_0}{2}\right)$$

On en déduit :

$$\varepsilon = \frac{\Delta L_f}{L_f} = \frac{A_0 \cdot (\alpha - \Psi) \cos\left(\frac{\theta_0}{2}\right)}{2 \cdot A_0 \cdot \sin\left(\frac{\theta_0}{2}\right)} \quad \text{ou} \quad \varepsilon = \frac{(\alpha - \Psi)}{2 \cdot \tan\left(\frac{\theta_0}{2}\right)} \qquad (2)$$

Nous pouvons maintenant exprimer $\theta_0$ en fonction de la géométrie des pièces de l'inclinomètre de la figure 1 (voir la figure 2) :

$$\tan\left(\frac{\theta_0}{2}\right) = \frac{L_f}{2R} \quad \text{et par conséquent :} \quad \varepsilon = (\alpha - \Psi) \cdot \frac{R}{L_f} \qquad (3)$$

Cette relation nous permet de déterminer les valeurs de R et de $L_f$ qui permettent d'obtenir la gamme et la résolution requises. L'angle $\psi$ est inconnu et, pour le déterminer, écrivons l'équation d'équilibre de l'inclinomètre.

Cet inclinomètre peut être assimilé à un système en rotation. A l'équilibre, nous pouvous écrire que la somme des moments des forces qui lui sont appliquées est nulle.

Or nous savons que :

- la masse (voir figure 1) M induit un moment : $M.g.L_m.\sin(\psi)$
- le réseau de Bragg 20 est sous contrainte et induit un moment $M_{20} = (F_0 + F_1) \cdot R$
- le réseau de Bragg 22 est sous contrainte et ce réseau induit un moment $M_{22} = -(F_0 + F_2).R$ où $F_0$ représente le module de la force de pré-contrainte et $\bar{F}_1$ est égal a $\bar{F}_2$ et le module commun à ces deux forces est donné par la loi de Hooke et vaut donc $S_f.E_f.\varepsilon$.

On néglige les frottements de l'axe de rotation.

L'équation d'équilibre s'écrit alors :

$$M.g.L_m.\sin(\Psi) = (F_0 + F_1).R - (F_0 + F_2).R \text{ ou } M.g.L_m.\sin(\Psi) = (F_1 - F_2).R$$

$$\text{ou} : M.g.L_m.\sin(\Psi) = 2.(\alpha - \Psi)\frac{R^2}{L_f} \cdot S_f. E_f$$

Au premier ordre, on obtient donc pour de petits angles :

$$\text{M.g.L}_\text{m}.\sin(\Psi)=2\alpha.\frac{R^2}{L_f}.S_f.E_f-2.\Psi.\frac{R^2}{L_f}.S_f.E_f \quad \text{ou} \quad \alpha=\Psi\left[\frac{\text{M.g.L}_\text{m}+2.R^2.\frac{S_f}{L_f}.E_f}{2.R^2.\frac{S_f}{L_f}.E_f}\right]$$

ou $\alpha=\psi.[1+X]$ avec $X=\dfrac{\text{M.g.L}_m.L_f}{2.R^2.S_f.E_f}$

En utilisant l'équation (3) on en déduit :

$$\varepsilon=\left(\alpha-\frac{\alpha}{1+X}\right)\frac{R}{L_f}=\left(-\frac{X}{1+X}\right)\frac{R}{L_f}.\alpha$$

On obtient donc :

$$\varepsilon=\left[\frac{\text{M.g.L}_\text{m}.L_f}{\text{M.g.L}_\text{m}.L_f+2.R^2.S_f.E_f}\right]\frac{R}{L_f}.\alpha \quad (4)$$

$\varepsilon/\alpha$ peut être exprimé en [(µm/m)/µrad] ou en [(µm/m)/degré] et représente la sensibilité de l'inclinomètre, 1 µm/m étant généralement dénommé une microdéformation, notée 1 µ$\varepsilon$ (ou µstrain dans la littérature angle-saxonne).

Grâce à cette relation (4), nous sommes capables de prédire le comportement d'un tel inclinomètre et de déterminer les paramètres mécaniques permettant d'obtenir les caractéristiques métrologiques souhaitées.

La figure 3 est une vue en coupe longitudinale schématique d'un inclinomètre conforme à l'invention. Sur cette figure 3, on retrouve la partie supérieure 4 de l'inclinomètre, la partie inférieure 6 de ce dernier, comprenant une masse 16 faisant office de pendule, l'articulation 8 comprenant un axe 14. Cet axe est monté sur un roulement à bille de précision (non représenté).

On voit également le corps creux 10 qui contient les parties 4 et 6, la partie 4 étant fixée à ce corps.

Les moyens de fixation de ce corps à une structure dont on veut mesurer les variations d'inclinaison ne sont pas représentés.

On voit en outre la fibre optique 18 ainsi que les portions 20 et 22 de cette fibre, comprenant respectivement les réseaux de Bragg 24 et 26.

La portion de fibre 20 est pré-tendue par l'intermédiaire de deux systèmes de fixation ou de collage, ou encore de deux mâchoires 28 et 30 qui sont respectivement fixées aux parties supérieure et inférieure. De même, la portion de fibre 22 est pré-tendue par l'intermédiaire de deux mâchoires 32 et 34 qui sont respectivement fixées aux parties supérieure et inférieure.

La partie inférieure de la fibre optique 18 traverse un trou courbe 36 formé dans la masse 16. De plus la fibre optique 18 pénètre dans l'inclinomètre par un orifice d'entrée 38 et en ressort par un orifice de sortie 40, ces orifices 38 et 40 étant fixés à la partie supérieure de l'inclinomètre.

On voit aussi plusieurs joints d'étanchéité 41 et, à la base du corps 10, un moyen de sécurité 42 prévu pour immobiliser la masse 16 pendant le transport de l'inclinomètre.

L'inclinomètre de la figure 3 comprend en outre un système de décalage d'origine angulaire, destiné à replacer la masse 16 verticalement pour faire les mesures lorsque le corps 10 de l'inclinomètre n'est pas vertical et repose par exemple contre un mur en pente. Un exemple particulier d'un tel système de décalage d'origine peut être constitué par le système 44 qui comprend essentiellement une bille percée 46, qui est montée dans une cage laissant cette bille percée, ou rotule, libre en rotation, ainsi qu'un axe 48 qui traverse la bille 46. La partie inférieure de cet axe 48 est reliée à la partie supérieure de l'articulation 8 tandis que la partie supérieure de l'axe 48 est déplaçable grâce à une tige de réglage 50.

On précise que le réglage du système 44 peut être effectué soit avant le montage de l'inclinomètre sur la structure dont on veut mesurer les variations d'inclinaison, soit après fixation suivant les facilités d'accès.

Pour l'inclinomètre de la figure 3, on a mis en évidence un effet d'hystérésis mécanique. La correction de cet effet peut être faite en utilisant le principe de la mesure différentielle qui a été donné plus haut.

Revenons sur le montage différentiel mentionné plus haut.

Les réseaux de Bragg étant sensibles à la température, à la pression et à l'allongement, ce montage différentiel permet de s'affranchir des variations de la température et de la pression. Dans ce qui suit, on ne considère que la température car, d'une part, les effets de la pression sont quasiment négligeables et, d'autre part, le principe de correction relatif à la pression est identique.

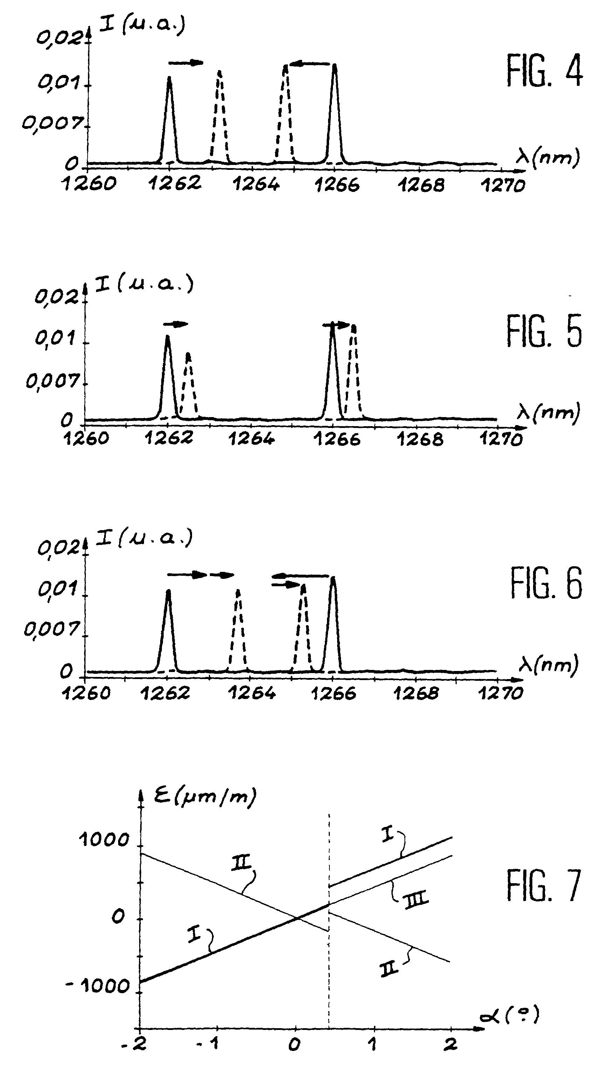

Les figures 4 à 6 illustrent la compensation des variations de température avec un inclinomètre du genre de celui de la figure 3, qui utilise un montage différentiel.

Sur ces figures, la longueur d'onde λ (exprimée en nm) est portée en abscisses et l'intensité lumineuse I (exprimée en unité arbitraire) est portée en ordonnées.

Sous l'effet d'une rotation seule, les longueurs d'onde des pics des réseaux de Bragg se décalent en sens opposés car l'un des réseaux est allongé et l'autre est raccourci (figure 4 où la rotation vaut environ 1,5°).

Sous l'effet d'une variation de température les longueurs d'onde des pics des réseaux de Bragg se décalent dans le même sens (figure 5 où la température varie d'environ 50°C).

Sous l'effet combiné de la rotation et de la variation de température le montage différentiel permet de compenser cette variation (figure 6).

L'illustration de cette compensation de température peut être visualisée à l'aide de courbes de réponse de l'inclinomètre (ε exprimé en μm/m en fonction de α exprimé en degrés).

Ces courbes sont formées en deux fois, avec deux températures différentes, à savoir 22°C et 40°C.

Sur la partie gauche de la figure 7 les deux réseaux à 22°C réagissent avec des pentes opposées (courbes I et II). Sur la partie droite de la figure 7, la température a augmenté jusqu'à 40°C et engendre un décalage des deux courbes. La réponse de l'inclinomètre où l'effet de la température a été corrigé, correspond à la courbe III.

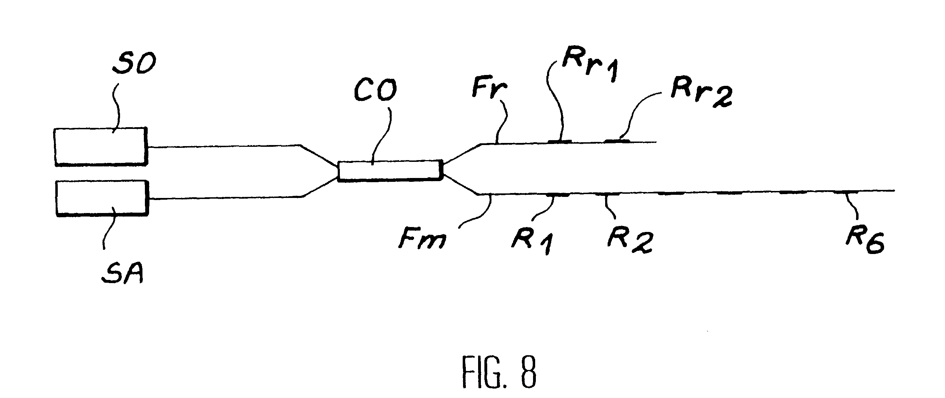

La figure 8 représente schématiquement un exemple de système de mesure contenant six réseaux de Bragg de mesure $R_1$, $R_2$ ... $R_6$.

On voit aussi une source optique SO et un système d'analyse spectrale SA qui sont reliés via un coupleur optique CO, d'une part à une fibre optique de mesure Fm, dans laquelle sont photo-inscrits les réseaux de Bragg de mesure $R_1$ à $R_6$, et d'autre part à une fibre optique de référence Fr dans laquelle sont photo-inscrits deux réseaux de Bragg de référence $Rr_1$ et $Rr_2$.

L'analyse spectrale de lumière réfléchie par lesdits réseaux de Bragg peut être réalisée suivant deux modes. Un premier, dit en réflexion, consiste à détecter une raie spectrale brillante rétro-réfléchie vers la source. Un second, dit en transmission, consiste à détecter une raie noire dans la lumière transmise. Le mode préférentiel est le mode réflectif. Il permet en outre, en cas de rupture de la fibre, de reconstituer la totalité de l'information spectrale, à condition de prévoir une interrogation par chacune des extrémités de cette fibre, soit à l'aide d'un commutateur à fibre optique reliant alternativement le système de mesure à chacune des extrémités, soit à l'aide de deux systèmes de mesure fonctionnant en alternance.

Revenons à la Figure 8. Les raies de Bragg des deux réseaux de références sont préalablement mesurées : leur écart spectral fixe le facteur d'échelle du système de mesure. Il suffit d'appliquer ce même facteur d'échelle aux spectres acquis sur la fibre ou branche de mesure pour retrouver, par une simple règle de trois, les longueurs d'ondes associées à chacun des réseaux de mesures $R_1$ à $R_6$.

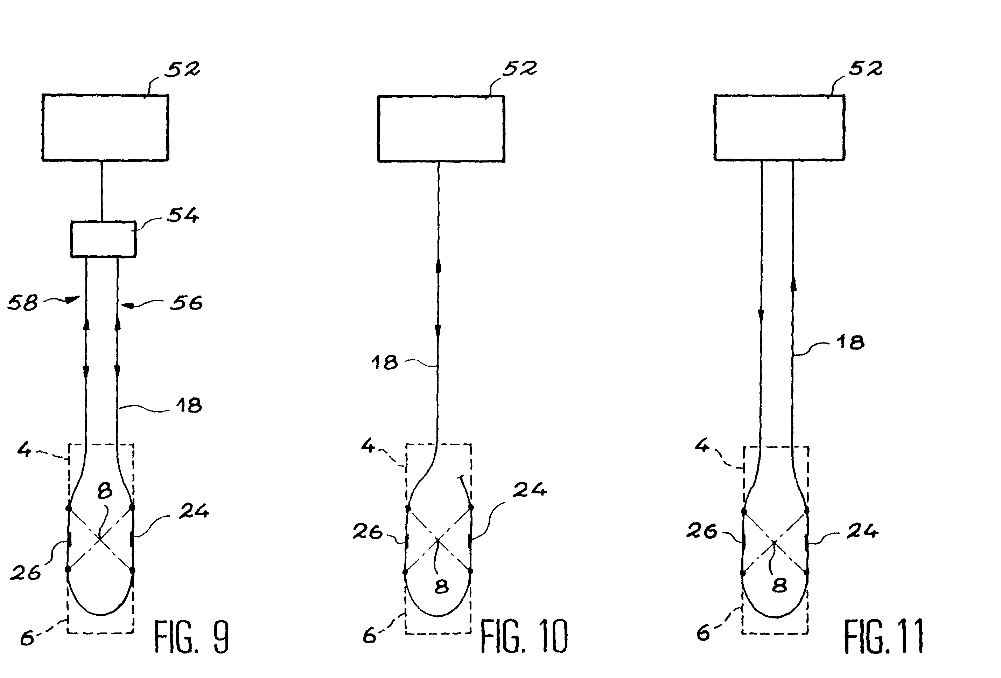

On voit sur la figure 9 un système de mesure de variations d'inclinaison qui incorpore l'inclinomètre de la figure 1 (ou de la figure 3). Ce système comprend des moyens de mesure 52 permettant « d'interroger » les réseaux de Bragg et de mesurer les variations d'inclinaisons.

Ces moyens de mesure 52 sont prévus pour envoyer dans la fibre optique 18 un spectre de lumières contenant au moins les longueurs d'onde différentes $\lambda_1$ et $\lambda_2$.

Sous l'effet d'une variation d'inclinaison, chacun des réseaux de Bragg 24 et 26 modifie la longueur d'onde des lumières qu'ils réfléchissent respectivement, puis ces lumières retournent aux moyens de mesure 52 par l'intermédiaire de la fibre optique.

La variation d'inclinaison est déterminée par ces moyens de mesure à partir des variations spectrales des lumières ainsi modifiées.

Dans l'exemple représenté sur la figure 9, les moyens de mesure 52 sont reliés à la fibre optique par l'intermédiaire d'un commutateur optique 54 permettant d'alterner l'interrogation (envoi et récupération de lumières) des réseaux de Bragg, cette interrogation ayant lieu alternativement par un côté 56 de la fibre optique puis par l'autre côté 58 de cette fibre et ainsi de suite, ce qui permet de reconstituer toute l'information spectrale utile même en cas de rupture de la fibre optique en un point quelconque.

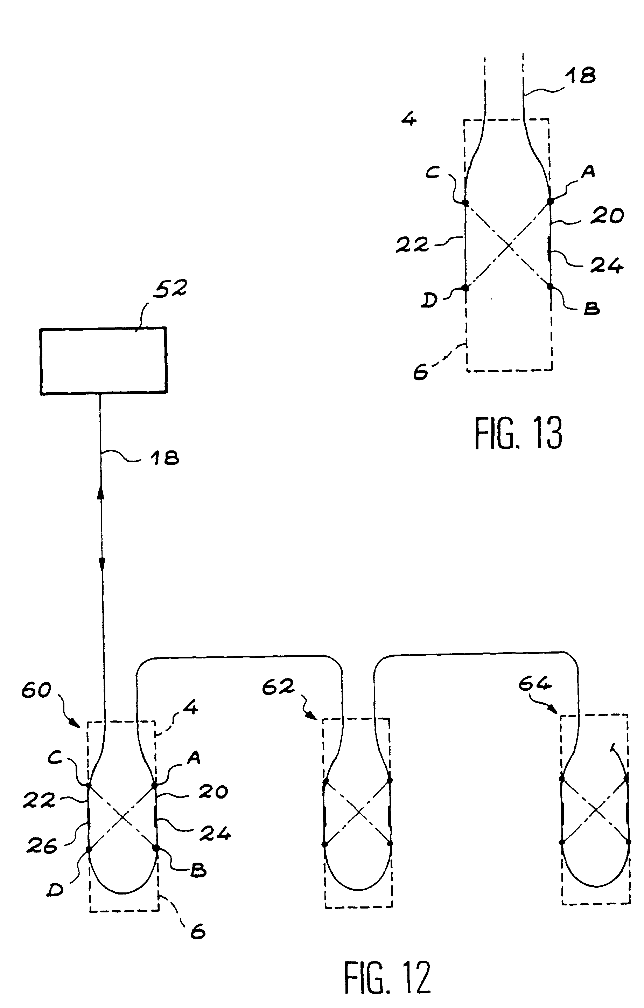

Dans un mode de réalisation plus simple (figure 10) on interroge les réseaux de Bragg par un seul côté de la fibre optique 18, l'autre côté étant libre.

Dans un autre mode de réalisation (figure 11), on envoie les lumières dans les réseaux de Bragg par un côté de la fibre optique 18 et l'on récupère des lumières éventuellement modifiées, par l'autre côté de la fibre optique, pour mesurer les variations d'inclinaison.

Sur la figure 12, on voit un système de mesure de variations d'inclinaisons en différentes zones. Ce système comprend plusieurs inclinomètres 60, 62 et 64 conformes à l'invention (par exemple du genre de celui de la figure 1) qui sont respectivement placés en ces différentes zones. De plus, la même fibre optique 18 est commune à tous ces inclinomètres qui sont ainsi montés en série par l'intermédiaire de cette fibre.

La figure 13 est une vue schématique d'un inclinomètre conforme à l'invention mais sans compensation de température. Cet inclinomètre est identique à l'inclinomètre de la figure 1 (ou 3) excepté qu'il ne comprend qu'un seul réseau de Bragg, à savoir le réseau de Bragg 24, aucun réseau n'étant formé dans la portion de fibre 22. Un tel inclinomètre est utilisable dans des endroits où la température reste sensiblement constante, par exemple dans les mines.

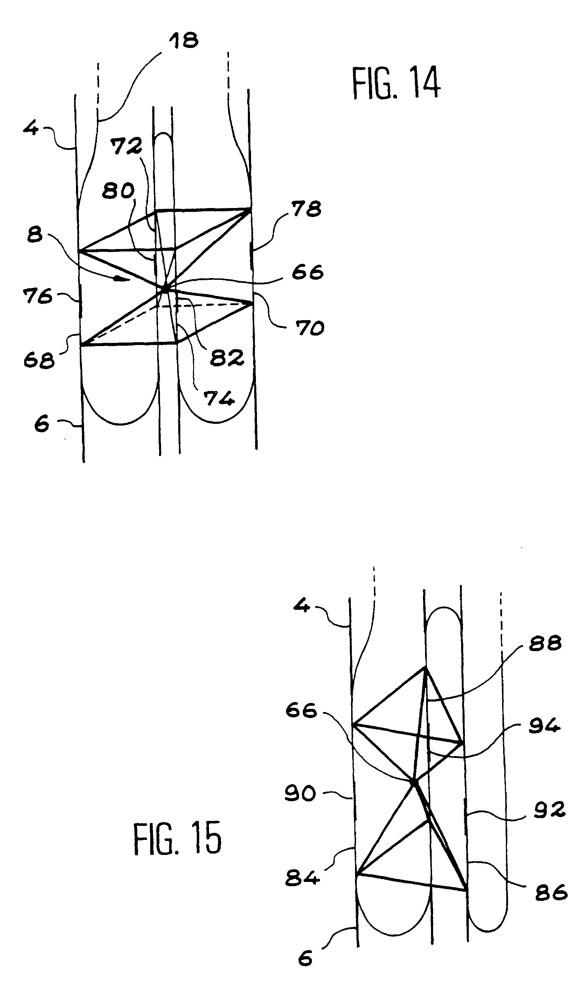

Un autre inclinomètre conforme à l'invention est schématiquement représenté sur la figure 14. Il s'agit d'un perfectionnement de l'inclinomètre de la figure 1, destiné à mesurer des variations d'inclinaison qui peuvent être définies par deux angles de rotation (au lieu d'un seul dans le cas de la figure 1).

Pour ce faire, au lieu d'un axe de rotation, l'articulation 8 de l'inclinomètre de la figure 14 comprend une rotule 66 (ou une suspension de type Cardan). De plus, cet inclinomètre comprend non pas deux portions de fibre optique mais quatre portions de fibre optique 68, 70, 72 et 74 soumises chacune à une pré-tension et respectivement pourvues de quatre réseaux de Bragg photo-inscrits 76, 78, 80 et 82.

Les portions de fibre 68 à 74 appartiennent encore à la même fibre optique 18.

Dans une vue en coupe transversale ces quatre portions forment les sommets d'un carré. On définit ainsi deux plans perpendiculaires, chaque plan contenant deux réseaux de Bragg qui sont associés l'un à l'autre. Dans l'exemple représenté, les réseaux de Bragg 76 et 78 sont associés l'un à l'autre et les réseaux 80 et 82 sont associés l'un à l'autre.

Pour faire les mesures de variations d'inclinaison on utilise quatre lumières de longueurs d'onde différentes $\lambda_1$, $\lambda_2$, $\lambda_3$ et $\lambda_4$ que l'on envoie dans la fibre optique 18 et qui sont respectivement associées aux réseaux de Bragg 76, 78, 80 et 82.

Dans le cas où l'on n'a pas besoin d'une compensation de température (dans une mine par exemple), on utilise un inclinomètre conforme à celui de la figure 14 mais sans les réseaux de Bragg 78 et 82.

L'inclinomètre de la figure 15 est un perfectionnement de celui de la figure 14 et utilise encore la rotule 66 mais seulement trois portions de fibre optique 84, 86 et 88 qui sont soumises chacune à une pré-tension et dans lesquelles sont respectivement photo-inscrits trois réseaux de Bragg 90, 92 et 94.

Dans une vue en coupe transversale ces trois portions forment les sommets d'un triangle équilatéral.

Pour faire les mesures de variations d'inclinaison avec l'inclinomètre de la figure 15, on utilise trois lumières de longueurs d'onde différentes $\lambda_1$, $\lambda_2$ et $\lambda_3$ que l'on envoie dans la fibre optique 18 (à laquelle appartiennent les portions de fibre 84, 86 et 88) et qui sont respectivement associées aux réseaux de Bragg 90, 92 et 94.

Certes, on connaît par l'article de M.G. Xu et al., Inst. J. of Optoelectronics, 1994, vol 9, n°3, pages 281 à 283, une jauge de flexion thermiquement compensée et utilisant, pour ce faire, une paire de réseaux de Bragg. Ces derniers sont respectivement formés dans deux portions de fibres optiques. Ces portions sont respectivement collées sur les faces supérieure et inférieure d'une poutre cantilever.

Ce document ne concerne pas les inclinomètres. De plus, les positions respectives des réseaux de Bragg après collage ne peuvent présenter la symétrie rigoureuse qui est nécessaire à une mesure différentielle, en raison d'une double opération de collage, dont les imperfections ne peuvent être parfaitement symétriques, ce qui conduit à des problèmes pour les mesures au voisinage du zéro. Il convient de noter que, dans la présente invention, aucune portion de fibre optique, dans laquelle on a formé un réseau de Bragg, n'est collée au niveau de ce réseau : cette portion est simplement fixée en ses deux extrémités après mise en tension.

**Revendications**

**1.** Inclinomètre destiné à mesurer une variation d'inclinaison d'une structure, cet inclinomètre étant **caractérisé en ce qu'**il comprend :

- une partie supérieure (4) destinée à être rendue rigidement solidaire de la structure afin que l'inclinaison de cette partie supérieure varie comme celle de la structure,
- une partie inférieure (6) destinée à se trouver au-dessous de la partie supérieure,
- une articulation (8) des parties inférieure et supérieure, la partie inférieure formant un pendule librement suspendu à la partie supérieure par cette articulation,
- au moins deux portions de fibre optique (20, 22 ; 68, 70, 72, 74 ; 84, 86, 88) placées de part et d'autre de l'articulation, chaque portion de fibre optique ayant des première et deuxième extrémités qui sont respectivement fixées aux parties inférieure et supérieure et étant préalablement mise en tension entre ces parties inférieure et supérieure, et
- au moins un réseau de Bragg (24, 26 ; 76, 78, 80, 82 ; 90, 92, 94), ce réseau de Bragg étant formé

dans l'une des deux portions de fibre optique, toute variation d'inclinaison de la structure provoquant une rotation de la partie supérieure par rapport à la partie inférieure et induisant de ce fait une contrainte sur le réseau de Bragg, ce réseau de Bragg étant alors apte à modifier une lumière se propageant dans la portion de fibre optique où se trouve ce réseau de Bragg, la variation d'inclinaison de la structure étant déterminée à partir de la lumière ainsi modifiée.

2. Inclinomètre selon la revendication 1, comprenant au moins deux réseaux de Bragg (24, 26), ces deux réseaux de Bragg étant respectivement formés dans les deux portions de fibre optique et subissant ainsi respectivement une contrainte de traction et une contrainte de compression lors de la variation d'inclinaison de la structure, ces réseaux de Bragg permettant une mesure différentielle de longueur d'onde, l'inclinomètre étant alors insensible aux variations de température et de pression ambiantes.

3. Inclinomètre selon l'une quelconque des revendications 1 et 2, dans lequel l'articulation (8) des parties inférieure et supérieure comprend un axe de rotation (14) destiné à être disposé horizontalement lors de la mesure de variation d'inclinaison.

4. Inclinomètre selon la revendication 1, dans lequel l'articulation (8) des parties inférieure et supérieure a au moins deux degrés de liberté de rotation, cet inclinomètre comprenant au moins trois portions de fibre optique (68, 70, 72, 74 ; 84, 86, 88) mises en tension et placées autour de cette articulation et au moins deux réseaux de Bragg (76, 78, 80, 82; 90, 92, 94), ces deux réseaux de Bragg étant respectivement formés dans deux des trois portions de fibre optique, l'inclinomètre étant alors prévu pour mesurer une variation d'inclinaison définissable par deux angles de rotation.

5. inclinomètre selon la revendication 4, dans lequel un troisième réseau de Bragg est formé dans la troisième portion de fibre optique, afin d'obtenir une troisième mesure, utilisée pour compenser l'effet de la température.

6. Inclinomètre selon l'une quelconque des revendications 4 et 5, dans lequel les trois portions de fibre optique sont disposées à 120° les unes des autres autour de l'articulation.

7. Inclinomètre selon la revendication 4, comprenant quatre portions de fibre optique (68, 70, 72, 74) mises en tension et disposées à 90° les unes des autres autour de l'articulation, et au moins deux réseaux de Bragg (76, 78, 80, 82), ces deux réseaux de Bragg étant respectivement formés dans deux des quatre portions de fibre optique et permettant de mesurer respectivement les deux angles.

8. Inclinomètre selon la revendication 7, comprenant quatre réseaux de Bragg (76, 78, 80, 82) qui sont respectivement formés dans les quatre portions de fibre optique, chaque réseau de Bragg étant associé au réseau de Bragg qui lui est opposé par rapport à l'articulation, ces réseaux de Bragg associés permettant une mesure différentielle de longueur d'onde, l'inclinomètre étant alors insensible aux variations de température et de pression ambiantes.

9. Inclinomètre selon l'une quelconque des revendications 4 à 8, dans lequel l'articulation comprend une rotule ou une suspension de type Cardan (66).

10. Inclinomètre selon l'une quelconque des revendications 1 à 9, comprenant une seule fibre optique (18) à laquelle appartient chaque portion de fibre optique.

11. Inclinomètre selon l'une quelconque des revendications 1 à 10, cet inclinomètre étant interrogé en réflexion, par l'une au moins des extrémités de la fibre dans laquelle est ou sont formés le ou les réseaux de Bragg.

12. Inclinomètre comprenant une pluralité d'inclinomètres (60, 62, 64) selon la revendication 10, ces inclinomètres étant montés en série par l'intermédiaire de la fibre optique (18).

**Patentansprüche**

1. Inklinometer, bestimmt zur Messung einer Neigungsänderung einer Struktur, wobei dieses Inklinometer **dadurch gekennzeichnet ist, dass** es umfasst:

  - einen oberen Teil (4), der starr mit der Struktur verbunden ist, so dass die Neigung dieses oberen Teils sich wie diejenige der Struktur ändert,

- einen unteren Teil (6), der sich unter dem oberen Teils befindet,
- ein den unteren und oberen Teil verbindendes Gelenk (8), wobei der untere Teil ein an dem oberen Teil mittels dieses Gelenks frei aufgehängtes Pendel bildet,
- wenigstens zwei Lichtleitfaser-Teilstücke (20, 22; 68, 70, 72, 74; 84, 86, 88), auf beiden Seiten des Gelenks befindlich, wobei jedes Lichtleitfaser-Teilstück ein erstes und zweites Ende hat, jeweils befestigt an dem unteren beziehungsweise oberen Teil und vorher zwischen diesem unteren und oberen Teil in Spannung versetzt, und
- wenigstens ein Bragg-Gitter (24, 26; 76, 78, 80, 82; 90, 92, 94), wobei dieses Bragg-Gitter in einem der beiden Lichtleitfaser-Teilstücke gebildet wird,

und da jede Neigungsänderung der Struktur eine Rotation des oberen Teils in Bezug auf den unteren Teil bewirkt und in dem Bragg-Gitter eine mechanische Spannung induziert, ist dieses Bragg-Gitter dann fähig, ein Licht zu modifizieren, das sich in dem Lichtleitfaser-Teilstück ausbreitet, wo sich das Bragg-Gitter befindet, wobei die Neigungsänderung der Struktur aufgrund des derart modifizierten Lichts bestimmt wird.

2. Inklinometer nach Anspruch 1 mit wenigstens zwei Bragg-Gittern (24, 26), wobei diese beiden Bragg-Gitter jeweils in beiden Lichtleitfaser-Teilstücken gebildet werden, die folglich bei einer Neigungsänderung der Struktur jeweils einer Zugspannung und einer Druckspannung ausgesetzt sind, so dass diese Bragg-Gitter eine differentielle Wellenlängenmessung ermöglichen und das Inklinometer dann für Umgebungstemperaturund -druckveränderungen unempfindlich ist.

3. Inklinometer nach einem der Ansprüche 1 und 2, bei dem das Gelenk (8) des unteren und oberen Teils eine Rotationsachse (14) umfasst, dazu bestimmt, während der Neigungsänderungsmessung horizontal ausgerichtet zu sein.

4. Inklinometer nach Anspruch 1, bei dem das Gelenk (8) des unteren und oberen Teils wenigstens zwei Freiheitsgrade hat, wobei dieses Inklinometer wenigstens drei Lichtleitfaser-Teilstücke (68, 70, 72, 74; 84, 86, 88) umfasst, in Spannung versetzt und um dieses Gelenk herum angeordnet, und wenigstens zwei Bragg-Gitter (76, 78, 80, 82; 90, 92, 94), wobei diese beiden Bragg-Gitter jeweils in zwei der drei Lichtleitfaser-Teilstücke gebildet werden und der Inklinometer dann vorgesehen ist, eine durch zwei Rotationswinkel definierbare Neigungsänderung zu messen.

5. Inklinometer nach Anspruch 4, bei dem in dem dritten Lichtleitfaser-Teilstück ein drittes Bragg-Gitter gebildet wird, um eine der Kompensation des Temperatureffekts dienende dritte Messung zu erhalten.

6. Inklinometer nach einem der Ansprüche 4 und 5, bei dem die drei Lichtleitfaser-Teilstücke um das Gelenk herum um 120° gegeneinander versetzt sind.

7. Inklinometer nach Anspruch 4, vier Lichtleitfaser-Teilstücke (68, 70, 72, 74), in Spannung versetzt und um das Gelenk herum um 90° gegeneinander versetzt, und wenigstens zwei Bragg-Gitter (76, 78, 80, 82) umfassend, wobei diese beiden Bragg-Gitter in jeweils zwei der vier Lichtleitfaser-Teilstücke gebildet werden und ermöglichen, jeweils die beiden Winkel zu messen.

8. Inklinometer nach Anspruch 7 mit vier Bragg-Gittern (76, 78, 80, 82), die jeweils in den vier Lichtleitfaser-Teilstükken gebildet werden, wobei jedes Bragg-Gitter durch das Gelenk mit dem ihm gegenüberstehenden Bragg-Gitter verbunden ist und diese verbundenen Bragg-Gitter eine differentielle Wellenlängenmessung ermöglichen, wobei das Inklinometer dann für die Umgebungstemperatur- und -druckbedingungen unempfindlich ist.

9. Inklinometer nach einem der Ansprüche 4 bis 8, bei dem das Gelenk ein Kugelgelenk oder eine kardanische Aufhängung (66) umfasst.

10. Inklinometer nach einem der Ansprüche 1 bis 9 mit einer einzigen Lichtleitfaser (18), zu der jedes Lichtleitfaser-Teilstück gehört.

11. Inklinometer nach einem der Ansprüche 1 bis 10, wobei dieses Inklinometer durch wenigstens eines der Enden der Faser, in der das oder die Bragg-Gitter gebildet wird oder werden, durch Reflexion abgefragt wird.

12. Inklinometer, eine Vielzahl von Inklinometern (60, 62, 64) nach Anspruch 10 umfassend, wobei diese Inklinometer mittels der optischen Faser (18) in Reihe geschaltet sind.

**Claims**

1. Inclinometer intended to measure an inclination variation of a structure, said inclinometer being **characterised in that** is comprises:

   - an upper part (4) intended to be rendered rigidly integral with the structure so that the inclination of said upper part varies like that of the structure,
   - a lower part (6) intended to be located below the upper part,
   - an articulation (8) of the lower and upper parts, the lower part forming a pendulum freely suspended from the upper part by this articulation,
   - at least two portions of optic fibre (20, 22; 68, 70, 72, 74; 84, 86, 88) placed on either side of said articulation, each portion of optic fibre having first and second ends which are respectively fastened to the lower and upper parts and which are previously put under tension between these lower and upper parts, and
   - at least one Bragg grating (24, 26; 76, 78, 80, 82; 90, 92, 94), said Bragg grating being formed in one. of the two portions of the optic fibre,

   any variation in the inclination of the structure provoking a rotation of the upper part in relation to the lower part and inducing, as a result, a stress on the Bragg grating, said Bragg grating then being able to modify a light that propagates in the portion of optic fibre where said Bragg grating is located, the variation in the inclination of the structure being determined from the light thereby modified.

2. Inclinometer according to claim 1, comprising at least two Bragg gratings (24, 26), said two Bragg gratings being respectively formed in the two portions of optic fibre and thus undergoing respectively a tensile stress and a compressive stress during the variation of inclination of the structure, said Bragg gratings making it possible to carry out a differential measurement of the wavelength, the inclinometer then being insensitive to variations in ambient temperature and pressure.

3. Inclinometer according to either of claims 1 or 2, in which the articulation (8) of the lower and upper parts comprises an axis of rotation (14) intended to be arranged horizontally during the inclination variation measurement.

4. Inclinometer according to claim 1, in which the articulation (8) of the lower and upper parts has at least two degrees of freedom of rotation, said inclinometer comprising at least three portions of optic fibre (68, 70, 72, 74; 84, 86, 88) put under tension and placed around said articulation and at least two Bragg gratings (76, 78, 80, 82; 90, 92, 94), said two Bragg gratings being respectively formed in two of the three portions of optic fibre, the inclinometer then being provided for measuring an inclination variation definable by two angles of rotation.

5. Inclinometer according to claim 4, in which a third Bragg grating is formed in the third portion of optic fibre in order to obtain a third measurement, used to compensate the effect of temperature.

6. Inclinometer according to either of claims 4 or 5, in which the three portions of optic fibre are arranged at 120° in relation to each other around the articulation.

7. Inclinometer according to claim 4, comprising four portions of optic fibre (68, 70, 72, 74) put under tension and arranged at 90° in relation to each other around the articulation, and at least two Bragg gratings (76, 78, 80, 82), said two Bragg gratings being respectively formed in two of the four portions of optic fibre, and making it possible to measure respectively the two angles.

8. Inclinometer according to claim 7, comprising four Bragg gratings (76, 78, 80, 82), which are respectively formed in the four portions of optic fibre, each Bragg grating being associated with the Bragg grating that is opposite to it in relation to the articulation, said associated Bragg gratings enabling a differential measurement of the wavelength, the inclinometer then being insensitive to variations in ambient temperature and pressure.

9. Inclinometer according to any of claims 4 to 8, in which the articulation comprises a spherical joint or a Cardan type suspension (66).

10. Inclinometer according to any of claims 1 to 9, comprising a single optic fibre (18) to which belongs each portion of optic fibre.

11. Inclinometer according to any of claims 1 to 10, said inclinometer being interrogated in reflection, by at least one of the ends of the optic fibre in which is or are formed the Bragg grating(s).

12. Inclinometer comprising a plurality of inclinometers (60, 62, 64) according to claim 10, said inclinometers being mounted in series through the intermediary of the optic fibre (18).

FIG. 1

FIG. 2

FIG. 3

FIG. 4

FIG. 5

FIG. 6

FIG. 7

FIG. 8

FIG. 9

FIG. 10

FIG. 11

FIG. 13

FIG. 12

FIG. 14

FIG. 15